# EUROPEAN PATENT APPLICATION

(11) **EP 3 322 133 A1**
(43) Date of publication of application: **16.05.2018**
(21) Application number: 17188110.5
(22) Date of filing: 28.08.2017
(51) Int. Cl.: H04L 12/40

(54) **COMMUNICATION APPARATUS, COMMUNICATION SYSTEM, COMMUNICATION METHOD, AND COMPUTER-READABLE MEDIUM**

(30) Priority: 14.11.2016 JP 2016221741
(71) Applicant: KABUSHIKI KAISHA TOSHIBA, Minato-ku Tokyo 105-8001 (JP)
(72) Inventor: Komano, Yuichi, Tokyo, 105-8001 (JP); Xia, Zhengfan, Tokyo, 105-8001 (JP); Kawabata, Takeshi, Tokyo, 105-8001 (JP); Kito, Toshiyuki, Tokyo, 105-8001 (JP)
(74) Representative: Hoffmann Eitle

(57) **Abstract**

According to an arrangement, a communication apparatus (30) is connected to a bus (90) in which a second bit has higher priority than a first bit, and the communication apparatus (30) includes an acquisition unit (32), a generation unit (33), and transmission unit (34). In the communicaiton apparatus (30), the acquisition unit (32) is configured to obtain first information. The generation unit (33) is configured to generate second information in which the first information is set at a predetermined position and a predetermined bit string including the first bit is set at a position other than the predetermined position. The transmission unit (34) is configured to transmit communication data including the second information.

## Description

### FIELD

The present disclosure relates to a communication apparatus, a communication system, a communication method, and a computer-readable medium.

### BACKGROUND

In an in-vehicle system of an automobile and a control system of an automobile, a plurality of terminals (Electronic Controller Unit: ECU) is connected to a communication path referred to as a control area network (CAN). In the CAN, a bus type network topology is mainly employed. In the bus type CAN, each terminal transmits data to a target terminal by using a broadcast channel.

However, in the broadcast channel such as the CAN, the number of terminals that can concurrently transmit has been limited to one. Therefore, in a case where the plurality of terminals transmits the data, the terminals need to transmit the data in sequence. Therefore, it takes time until communication of the plurality of terminals has been completed.

### BRIEF DESCRIPTION OF THE DRAWINGS

FIG. 1 is a diagram of an exemplary device structure of a communication system according to a first arrangement;
FIG. 2 is a diagram of an exemplary functional structure of a communication apparatus according to the first arrangement;
FIG. 3A is a diagram of an example 1 of a data format of communication data transmitted and received via a bus according to the first arrangement;
FIG. 3B is a diagram of an example 2 of a data format of communication data transmitted and received via the bus according to the first arrangement;
FIG. 4 is a diagram of an exemplary functional structure of a gateway according to the first arrangement;
FIG. 5 is a flowchart of an example of processing of the communication apparatus according to the first arrangement;
FIG. 6 is a flowchart of an example of reception processing of the gateway according to the first arrangement;
FIG. 7 is a diagram of a communication example according to a second modification of the first arrangement;
FIG. 8 is a diagram of an exemplary functional structure of a communication apparatus according to the second modification of the first arrangement;
FIG. 9 is a flowchart of an example of reception processing of the communication apparatus according to the second modification of the first arrangement;
FIG. 10 is a diagram of a communication example according to a third modification of the first arrangement;
FIG. 11 is a flowchart of an example of processing of a communication apparatus according to a third modification of the first arrangement;
FIG. 12 is a diagram of an exemplary functional structure of a communication apparatus according to a second arrangement;
FIG. 13 is a diagram of an exemplary functional structure of a gateway according to the second arrangement;
FIG. 14 is a flowchart of an example of processing of the communication apparatus according to the second arrangement;
FIG. 15 is a flowchart of an example of authentication processing of the gateway according to the second arrangement;
FIG. 16 is a diagram an exemplary functional structure of a gateway according to a modification of the second arrangement;
FIG. 17 is a sequence diagram of an example of mutual authentication processing according to the modification of the second arrangement;
FIG. 18 is a diagram of an exemplary functional structure of a communication apparatus according to a third arrangement;
FIG. 19 is a diagram of an exemplary functional structure of a gateway according to the third arrangement;
FIG. 20 is a flowchart of an example of processing of the communication apparatus according to the third arrangement;
FIG. 21 is a flowchart of an example of reception processing of the gateway according to the third arrangement; and
FIG. 22 is a diagram of an exemplary main part of a hardware configuration of the gateway and the communication apparatus according to the first to third arrangements.

### DETAILED DESCRIPTION

According to an arrangement, a communication apparatus is connected to a bus in which a second bit has higher priority than a first bit, and the communication apparatus includes an acquisition unit, a generation unit, and transmission unit. In the communication apparatus, the acquisition unit is configured to obtain first information. The generation unit is configured to generate second information in which the first information is set at a predetermined position and a predetermined bit string including the first bit is set at a position other than the predetermined position. The transmission unit is configured to transmit communication data including the second information.

Arrangements of a communication apparatus, a communication system, a communication method, and a computer-readable medium are described in detail below with reference to the drawings.

### First Arrangement

First, an exemplary device structure of a communication system according to a first arrangement is described.

### Device Structure of Communication System

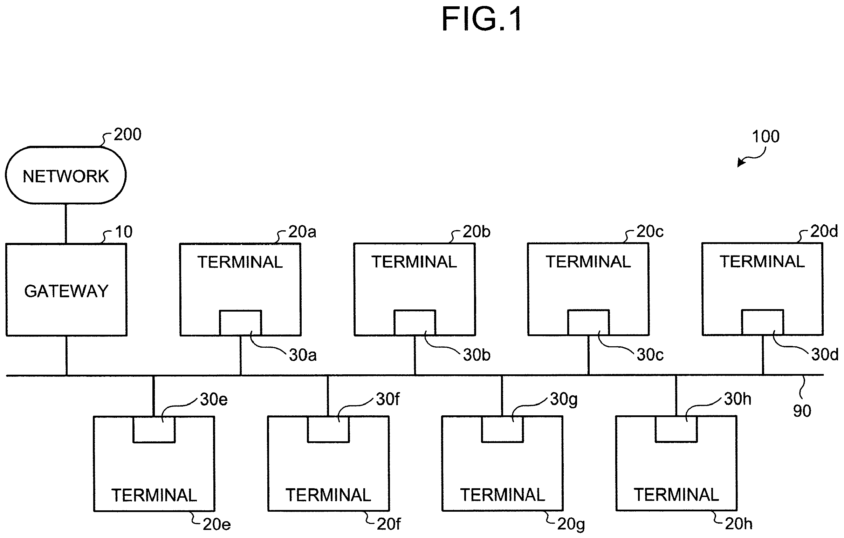

FIG. 1 is a diagram of an exemplary device structure of a communication system 100 according to the first arrangement. The communication system 100 according to the first arrangement includes a gateway 10 and terminals 20a to 20h. The terminals 20a to 20h respectively include communication apparatuses 30a to 30h.

Hereinafter, in a case where the terminals 20a to 20h are not distinguished, the terminals are simply referred to as a terminal 20. Similarly, in a case where the communication apparatuses 30a to 30h are not distinguished, the communication apparatuses are simply referred to as a communication apparatus 30.

The gateway 10 and the terminals 20a to 20h are connected via a bus 90. The number of terminals 20 connected to the bus 90 may be optionally determined. A communication standard of the bus 90 is, for example, the CAN. In the description of the first arrangement, a case where the communication standard of the bus 90 is the CAN is described as an example. In the arrangements, a bus complying with other communication standards having similar properties to the CAN, such as CAN with Flexible Data Rate (CAN-FD) may be used.

The gateway 10 is connected to a network 200. A communication standard of the network 200 is, for example, the Ethernet (registered trademark).

The communication system 100 according to the first arrangement is used for an in-vehicle system of a mobile body such as an automobile. In the description of the first arrangement, a case where the communication system 100 is an in-vehicle system of an automobile is described as an example. In a case where the communication system 100 according to the first arrangement is used in the in-vehicle system of the automobile, for example, the bus 90 is used for transmitting and receiving information on a control system such as a speed and a steering wheel angle of the automobile. Also, the network 200 is used for transmitting and receiving multimedia such as video displayed on a car navigation system.

The gateway 10 controls communication via the bus 90. Also, the gateway 10 mediates communication between a device connected to the network 200 and the terminal 20 connected to the bus 90.

The terminals 20a to 20h are, for example, ECUs. Each terminal 20 obtains sensor information and controls devices such as a brake.

The communication apparatus 30 controls communication of the terminal 20.

Next, an exemplary functional structure of the communication apparatus 30 according to the first arrangement is described.

### Functional Structure of Communication Apparatus

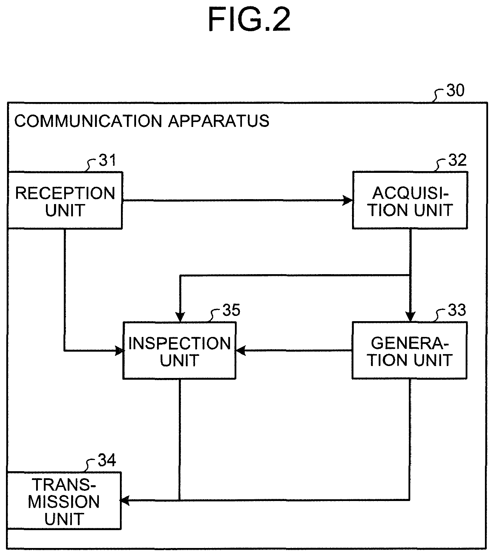

FIG. 2 is a diagram of an exemplary functional structure of the communication apparatus 30 according to the first arrangement. The communication apparatus 30 according to the first arrangement includes a reception unit 31, an acquisition unit 32, a generation unit 33, a transmission unit 34, and an inspection unit 35.

The reception unit 31 receives trigger information from the gateway 10 via broadcast communication for the plurality of communication apparatuses 30 (communication apparatuses 30a to 30h).

The trigger information may be arbitrary. The trigger information is, for example, information for inquiring about an operating state of the terminal 20 (communication apparatus 30). Also, for example, the trigger information is information for inquiring version information of firmware of the terminal 20 (communication apparatus 30). Further, for example, the trigger information is information for inquiring the sensor information obtained by the terminal 20. The sensor information is, for example, a steering wheel angle and a temperature.

Upon receiving the trigger information from the gateway 10, the reception unit 31 inputs the trigger information to the acquisition unit 32.

Upon receiving the trigger information from the reception unit 31, the acquisition unit 32 obtains first information according to the trigger information.

The first information is information to be transmitted as a response to the trigger information. For example, in a case where the trigger information is the information for inquiring the operating state of the terminal 20, the first information is one (operated) or zero (not operated), and the like. Also, for example, in a case where the trigger information is the information for inquiring the version information of the firmware of the terminal 20, the first information is 0x1A (version is 26 in decimal system) and the like. Further, for example, in a case where the trigger information is the information for inquiring the sensor information obtained by the terminal 20, the first information is 0x21C (steering wheel angle is 540 degrees in decimal system), 0x55 (temperature is 85 degrees), and the like.

Note that the trigger information may include information for specifying the terminal 20 to be responded and information for specifying the first information to be obtained.

Also, the first information may include a plurality of different types of information. For example, the first information may include the version information of the firmware of the terminal 20 and the sensor information.

The acquisition unit 32 inputs the first information to the generation unit 33.

Upon receiving the first information from the acquisition unit 32, the generation unit 33 generates second information by using the first information. The second information is information to be transmitted from the communication apparatus 30 to the gateway 10 via the bus 90. The second information is transmitted in a data format of communication data transmitted and received via the bus 90.

Here, an example of the data format of the communication data to be transmitted and received via the bus 90 according to the first arrangement is described.

### Example of Data Format

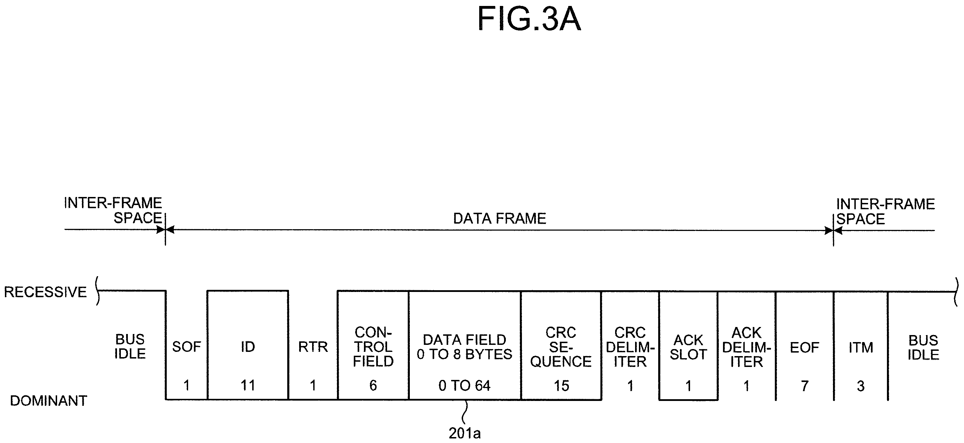

FIG. 3A is a diagram of an example 1 of the data format of the communication data to be transmitted and received via the bus 90 according to the first arrangement. In FIG. 3A, a case is illustrated where the data format of the communication data to be transmitted and received via the bus 90 is a standard format used in the CAN. In the example of FIG. 3A, a region (first region) in which the second information is set is, for example, a data field 201a.

In the CAN, information is transmitted and received by using electrical transitions of two states, i.e., dominant (zero as information) and recessive (one as information). Also, the CAN has characteristics such that dominant overwrites recessive.

A communication standard of the bus 90 is not limited to the CAN, and any bus may be used as long as a second bit (for example, zero) has priority over a first bit (for example, one).

### Second Information Transmission Processing

The generation unit 33 sets the first information in the data field 201a. Specifically, the generation unit 33 sets the first information at a predetermined position (position allocated to the own communication apparatus) in the data field 201a.

For example, in a case where the data size of the first information is one byte and the first byte of the eight-bytes data field is allocated to the communication apparatus 30a (terminal 20a), the generation unit 33 of the communication apparatus 30a (terminal 20a) sets the first information at the position of the first byte in the data field 201a. Similarly, the generation unit 33 of the terminal 20b sets the first information at the position of the second byte in the data field 201a. The generation unit 33 of the terminal 20c sets the first information at the position of the third byte in the data field 201a. The generation unit 33 of the terminal 20d sets the first information at the position of the fourth byte in the data field 201a. The generation unit 33 of the terminal 20e sets the first information at the position of the fifth byte in the data field 201a. The generation unit 33 of the terminal 20f sets the first information at the position of the sixth byte in the data field 201a. The generation unit 33 of the terminal 20g sets the first information at the position of the seventh byte in the data field 201a. The generation unit 33 of the terminal 20h sets the first information at the position of the eighth byte in the data field 201a.

Also, the generation unit 33 sets the recessive in the data field 201a other than the positions where the first information has been set.

For example, in a case where the data size of the first information is one byte, the generation unit 33 of the communication apparatus 30a (terminal 20a) sets the recessive (0xFF) at the positions of the second to eighth bytes in the data field 201a. Also, for example, the generation unit 33 of the terminal 20b sets the recessive at the positions of the first byte and the third to eighth bytes in the data field 201a. Further, for example, the generation unit 33 of the terminal 20c sets the recessive at the positions of the first and the second bytes and the fourth to eighth bytes in the data field 201a.

That is, the generation unit 33 of the communication apparatus 30a (terminal 20a) generates 0x(R1) FFFFFF FFFFFFFF (eight-byte hexadecimal number) as the second information. Here, R1 indicates the first information (variable including value of one byte) obtained by the terminal 20a. Also, the generation unit 33 of the terminal 20c generates 0xFFFF (R3)FF FFFFFFFF (eight-byte hexadecimal number) as the second information. Here, R3 indicates the first information (variable including value of one byte) obtained by the terminal 20c.

As a result, in each byte included in the data field 201a, the first information obtained by one terminal 20 is set.

The generation unit 33 inputs the communication data including the second information to the transmission unit 34.

Upon receiving the communication data from the generation unit 33, the transmission unit 34 transmits the communication data to the gateway 10 via the bus 90.

Each of the communication apparatuses 30a to 30h sets predetermined data in a field other than the data field 201a. The communication data transmitted to the bus 90 by each of the communication apparatuses 30a to 30h reaches the gateway 10 without rewriting the values in the fields other than the data field 201a based on the relation between the dominant and the recessive.

In addition, the one-byte first information set in the data field 201a by a certain communication apparatus 30 is superimposed on the bus 90 with the recessive (0xFF) set by the other communication apparatus 30. Based on the relationship between the dominant and the recessive, the first information included in the communication data reaches the gateway 10 without changing its value.

The data format of the communication data is not limited to the data format in FIG. 3A.

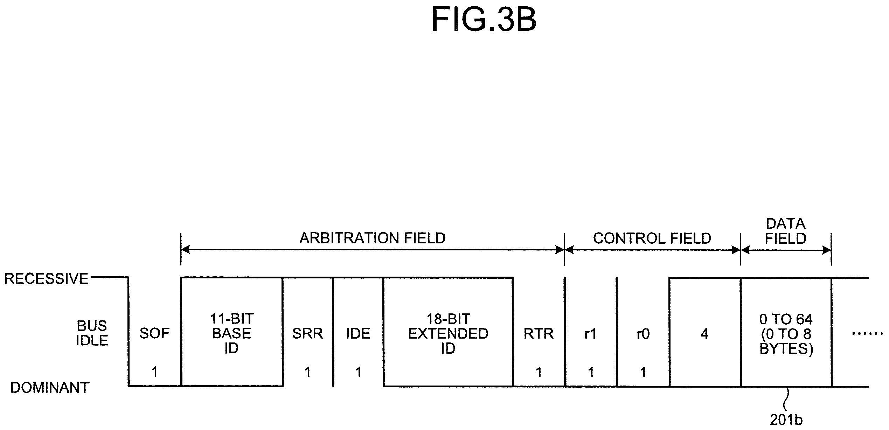

FIG. 3B is a diagram of an example 2 of a data format of communication data to be transmitted and received via the bus 90 according to the first arrangement. In FIG. 3B, a case is indicated where the data format of the communication data to be transmitted and received via the bus 90 of the second information is an extended format used in the CAN. In the example in FIG. 3B, a region in which the second information is set is, for example, a data field 201b.

Next, inspection processing of the communication data is described.

### Inspection Processing of Communication Data

After the communication data has been transmitted to the bus 90 by the transmission unit 34, the reception unit 31 receives the communication data superimposed by the other communication apparatus 30 from the bus 90. The reception unit 31 inputs the communication data to the inspection unit 35.

The inspection unit 35 compares the communication data received from the reception unit 31 with the communication data transmitted by the transmission unit 34 to check whether the communication data received from the reception unit 31 is normal.

First, the inspection unit 35 compares whether values respectively set in the fields other than the data field 201a coincide with each other. The inspection unit 35 performs abnormality processing in a case where there are values that do not coincide with each other. The abnormality processing is processing for transmitting abnormality information indicating an abnormality to the gateway 10. The abnormality information is, for example, a plurality of dominants (for example, six continuous zeros).

Next, the inspection unit 35 checks whether the first information set by the communication apparatus 30 in the data field 201a of the communication data received from the reception unit 31 is normal. In a case where the first information is not normal, for example, the first information is rewritten due to some abnormality or the like. In a case where the first information is not normal, the inspection unit 35 performs the abnormality processing.

Next, an exemplary functional structure of the gateway 10 according to the first arrangement is described.

### Functional Structure of Gateway

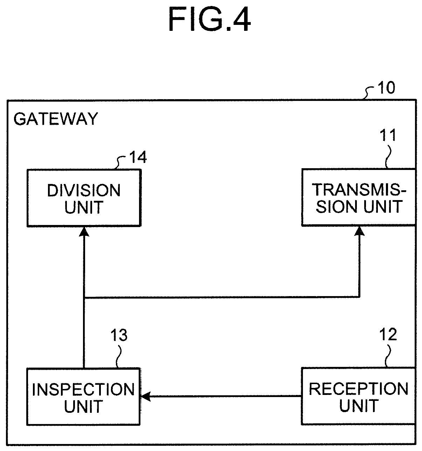

FIG. 4 is a diagram of an exemplary functional structure of the gateway 10 according to the first arrangement. The gateway 10 according to the first arrangement includes a transmission unit 11, a reception unit 12, an inspection unit 13, and a division unit 14.

The transmission unit 11 transmits the trigger information via broadcast communication for the plurality of communication apparatuses 30 (communication apparatuses 30a to 30 h).

Upon receiving a single piece of the communication data superimposed on the bus 90 by the communication apparatuses 30a to 30h from the bus 90, the reception unit 12 inputs the communication data to the inspection unit 13.

Upon receiving the communication data from the reception unit 12, the inspection unit 13 checks whether the communication data is normal. In a case where the communication data is abnormal, the inspection unit 13 performs the abnormality processing.

### Example in a case where Communication Data is Abnormal

For example, in a case where the communication data includes the abnormality information, the inspection unit 13 determines that the communication data is abnormal. Also, for example, in a case where values of the EOF included in the communication data are not consistent with each other, the inspection unit 13 determines that the communication data is abnormal.

Since the plurality of communication apparatuses 30 writes data to the data field 201a, the inspection unit 13 does not refer to a field where a CRC (Cyclic Redundancy Check) sequence in FIG. 3A is stored.

### Example of Abnormality Processing

In a case where the communication data is abnormal, the inspection unit 13 performs retransmission processing for retransmitting the trigger information, for example. Also, for example, in a case where the communication data is abnormal, the inspection unit 13 outputs information indicating abnormality to the outside. Specifically, the inspection unit 13 turns on an abnormal lamp disposed, for example, on a dashboard of a driver's seat. Also, for example, the inspection unit 13 outputs an abnormality message to an OBD-II port for inspection. In a case where the communication data is abnormal, the inspection unit 13 may wait without performing the retransmission processing and the like.

In a case where the communication data is normal, the division unit 14 divides the second information set in the data field 201a of the communication data into the first information set by each communication apparatus 30.

Next, an example of communication processing according to the first arrangement is described with reference to the flowchart.

### Processing of Communication Apparatus

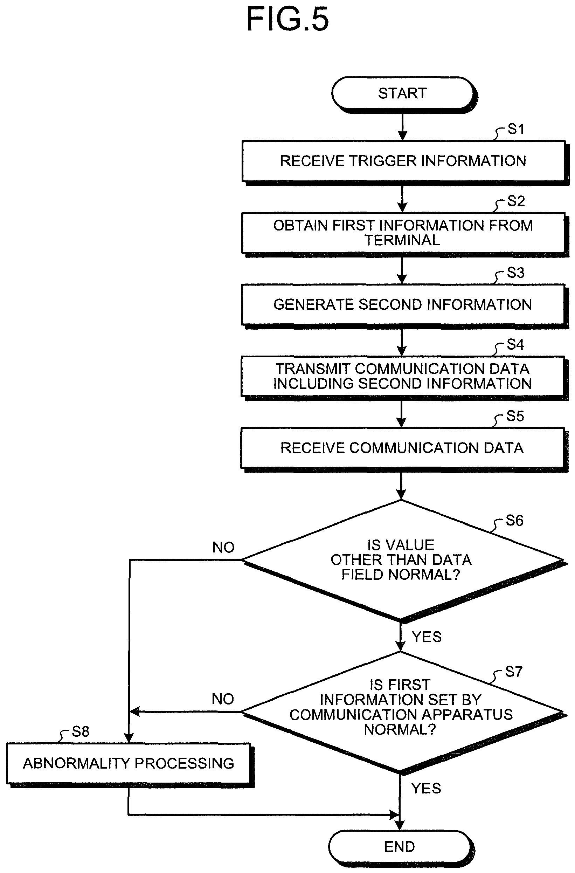

FIG. 5 is a flowchart of an example of processing of the communication apparatus 30 according to the first arrangement. First, the reception unit 31 receives the trigger information from the gateway 10 (step S1). Next, the acquisition unit 32 obtains the first information (sensor information obtained by terminal 20) according to the trigger information received by the processing in step S1 (step S2).

Next, the generation unit 33 generates the second information by using the first information (step S3). Next, the transmission unit 34 transmits the communication data including the second information generated by the processing in step S3 to the gateway 10 via the bus 90 (step S4).

Next, after the communication data has been transmitted to the bus 90 by the processing in step S4, the reception unit 31 receives the communication data superimposed by the other communication apparatus 30 from the bus 90 (step S5).

Next, the inspection unit 35 checks whether a value other than the data field 201a in the communication data received by the processing in step S5 is normal (step S6).

In a case where the value other than the data field 201a is normal (step S6, Yes), the procedure proceeds to step S7. In a case where the value other than the data field 201a is not normal (step S6, No), the inspection unit 35 performs the abnormality processing (step S8).

Next, the inspection unit 35 checks whether the first information, being set by the own communication apparatus 30, of the communication data received by the processing in step S5 is normal (step S7).

In a case where the first information is normal (step S7, Yes), the procedure ends. In a case where the first information is not normal (step S7, No), the inspection unit 35 performs the abnormality processing (step S8).

### Reception Processing of Gateway

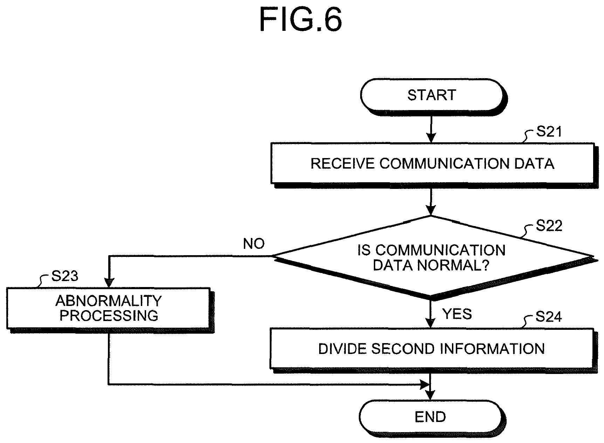

FIG. 6 is a flowchart of an example of reception processing of the gateway 10 according to the first arrangement. First, the reception unit 12 receives the communication data from the bus 90 (step S21).

Next, the inspection unit 13 checks whether the communication data received by the processing in step S21 is normal (step S22).

In a case where the communication data is not normal (step S22, No), the inspection unit 13 performs the abnormality processing (step S23).

In a case where the communication data is normal (step S22, Yes), the division unit 14 divides the second information set in the data field 201a of the communication data into the first information set by each communication apparatus 30 (step S24).

In steps S22 and S24, in a case where the communication data is normal, the transmission unit 11 may notify the communication apparatus 30 (terminal 20) that the reception has been completed.

The notification of the reception completion may include, for example, flag information indicating that the first information could have been correctly received. In a case where the first information could have been correctly received, for example, is a case where information other than the recessive can be received. Also, for example, in a case where the first information could have been correctly received is a case where data in an appropriate range can be received.

Here, the flag information may indicate whether the plurality of pieces of communication data received by the gateway 10 has been successively received. For example, in a case where the first information of the eight terminals 20 can be received by using a single piece of the communication data, the successful reception relative to the two pieces of communication data can be collectively indicated. In this case, the flag information includes, for example, 16-bit information representing, for example, whether the first information of 16 terminals 20 has been successfully received. For example, in the 16-bit flag information, the reception of the first information transmitted from the terminal 20 corresponding to the position where zero is in a bit indicates failure, and the reception of the first information transmitted from the terminal 20 corresponding to the position where one is in a bit indicates success. The transmission unit 11 may transmit the trigger information again to the terminal 20 corresponding to the position where zero is in the bit.

As described above, in the communication system 100 according to the first arrangement, each of the communication apparatuses 30a to 30f sets the first information at the position being allocated to the own communication apparatus 30 in the data field 201a and generates the second information in which the recessive has been set in the data field 201a other than the above position.

Thus, according to the communication system 100 of the first arrangement, the plurality of communication apparatuses 30 (terminals 20) can concurrently communicate by using the data field 201a of the single communication data. That is, according to the communication system 100 of the first arrangement, time until the plurality of communication apparatuses 30 (terminal 20) has completed the communication can be shortened than a case where the data field 201a of individual communication data is used for each communication apparatus 30.

In the description of the first arrangement, a case where the communication system 100 is an in-vehicle system of an automobile has been described as an example. However, the communication system 100 according to the first arrangement can also be applied to other control systems.

In the description of the first arrangement, a case where the eight-byte data field 201a is used as the region of the second information has been described. However, as the region of the second information, a region having a length less than eight bytes in the data field 201a may be specified.

Also, fields other than the data field 201a may be used as the region of the second information. For example, as the region of the second information, a 18-bit extended ID field (refer to FIG. 3B) may be used.

In the description of the first arrangement, a case has been described where the region of the first information is allocated byte by byte to the eight terminals 20 (communication apparatus 30) by equally dividing the data field 201a. However, as the region of the first information, the data field 201a divided into optional lengths or the extended ID fields divided into optional lengths may be allocated to less than eight or equal to or more than eight terminals 20 (communication apparatus 30).

In the description of the first arrangement, a case has been described where the communication apparatuses 30a to 30h start processing according to the trigger information transmitted by the gateway 10. However, the communication apparatuses 30a to 30h may obtain the first information and transmit the communication data including the second information at a predetermined timing. The predetermined timing is, for example, immediately after the ignition is turned on and a periodic timing. In this case, the transmission and the reception of the trigger information may be omitted.

In the communication system 100 according to the first arrangement, depending on the combination of the pieces of the first information respectively transmitted by the different communication apparatuses 30, a state that is determined as illegal under the CAN specification (for example, same states continuously appear six times or more) occurs. In such a case, the state cannot be distinguished from the abnormality information set by the terminal 20 by the processing in step S8. Therefore, the gateway 10 cannot normally receive the communication data. In such a case, the state regarded as illegal under the CAN specification may be ignored relative to a massage to which a specific ID indicating the application of the present arrangement is applied. Alternatively, the transmission unit 11 of the gateway 10 may transmit a retransmission request requesting the retransmission of the first information by switching the order of the allocation of the terminals 20 in which the first information is arranged in the data field 201a.

### First Modification of the First Arrangement

Next, a first modification of the first arrangement is described. In the description of the first modification of the first arrangement, the description similar to that of the first arrangement is omitted, and parts different from the first arrangement are described. The CAN is used as the communication standard of the bus 90 according to the first modification of the first arrangement similarly to the case of the first arrangement.

In general, in the CAN, when the same states continue five times, a bit called a stuff bit which is inverted is inserted to prevent synchronization deviation of the terminal 20 connected to the CAN. For example, in a case where the terminal 20 on the transmission side continuously transmits the recessives six times (111111), the stuff bit is the dominant (0). Therefore, when continuously transmitting six recessives (111111), the terminal 20 on the transmission side transmits 1111101 to which the dominant has been inserted as the sixth bit.

Upon receiving 1111101, the terminal 20 on the reception side determines that the next bit of the recessives (11111) continuing five times is a dominant (0) inserted as the stuff bit. That is, the terminal 20 on the reception side adds the recessive (1) next to the stuff bit to the five continuous recessives (11111) and assumes the six continuous recessives (111111) as a message.

In the first arrangement, an example has been described in which each communication apparatus 30 sets recessive (0xFF) to the region in the data field 201a which is not allocated as the first information of the own communication apparatus 30. However, according to the insertion rule of the stuff bits of the CAN in the related art, it is necessary for the transmission unit 34 of each communication apparatus 30 to insert the stuff bit when transmitting five continuous recessives (11111). Accordingly, the communication apparatuses 30 cannot synchronize the regions to which the first information is written.

When generating the second information, the generation unit 33 according to the first modification of the first arrangement sets a predetermined bit string including not only recessives but also dominants to the region which is not allocated as the region of the first information of the own communication apparatus 30.

For example, instead of setting the recessive (0xFF), the generation unit 33 sets 0xEE including the dominants to the region which is not allocated as the region of the first information of the communication apparatus 30 as the predetermined bit string.

In a case where the data size of the first information is one byte, for example, the generation unit 33 of the communication apparatus 30a (terminal 20a) sets 0xEE at the positions of the second to eighth bytes in the data field 201a. That is, the generation unit 33 of the communication apparatus 30a (terminal 20a) generates 0x(R1)EEEEEE EEEEEEEE (eight-byte hexadecimal number) as the second information. Here, R1 indicates the first information (variable including value of one byte) obtained by the terminal 20a.

At this time, the fourth bit and the eighth bit counted from the high order bit of R1 are overwritten by the dominant (0) of 0xEE set by the other communication apparatus 30 (communication apparatuses 30b to 30h). Therefore, the information that can be transmitted as R1 is six-bit information of the first to third bits and the fifth to seventh bits.

Alternatively, the third and the fourth bits and the seventh and the eighth bits counted from the high order bit of R1 are fixed to one, zero, one, zero, and the information that can be transmitted as R1 may be four-bit information including the first and the second bits and the fifth to the sixth bits. By limiting the information that can be transmitted in this way, zeros or ones continuously appear no more than three times regardless of the data to be transmitted. Therefore, the stuff bit is not inserted.

Alternatively, instead of 0xEE, the generation unit 33 may set 0x77 and 0xBB to the region which is not allocated as the region of the first information of the communication apparatus 30 as the predetermined bit string. Even in a case where the predetermined bit string is used, the stuff bit can be prevented from being inserted by limiting the information that can be transmitted.

Also, the generation unit 33 may use the following bit string instead of the predetermined bit string determined for each byte. For example, the generation unit 33 may use 1111 0111 1011 1101 1110 1111 0111 1011 1101 1110 1111 0111 1011 1101 1110 1111 (binary number) = 0xF7BD EF7B DEF7 BDEF (hexadecimal number). In this example, the generation unit 33 of the communication apparatus 30 which does not store the first information in the first byte sets 0xF7 instead of the recessive (0xFF) of the first arrangement. Also, the generation unit 33 of the communication apparatus 30 which does not store the first information in the second byte sets 0xBD instead of the recessive (0xFF) of the first arrangement.

Even in a case where 0xF7BD EF7B DEF7 BDEF (hexadecimal number) is used, for example, the stuff bit can be prevented from being inserted by limiting the information that can be transmitted as R1 to the first to the third bits and the sixth to the eighth bits and the information that can be transmitted as R2 to the third to the sixth bits.

However, if the information that can be transmitted to prevent the insertion of the stuff bit is not limited as described above, there are two kinds of cases where the influence of the stuff bit is received even when the generation unit 33 uses 0xEE or the like as the predetermined bit string instead of the recessive (0xFF).

One of the two kinds of the cases is a case where the result of superimposing the bit string of the first information of a certain communication apparatus 30 with a predetermined bit string (0×EE and the like) establishes a condition for inserting the stuff bit.

The other case is a case where a bit string crossing the regions allocated to the different communication apparatuses 30 establishes the condition for inserting the stuff bit according to the combination of the pieces of the first information set by different communication apparatuses 30.

### Processing Considering Stuff Bit

In the former case, the generation unit 33 of each communication apparatus 30 generates the second information based on the first information and the predetermined bit string in consideration of the stuff bit. For example, in a case where the predetermined bit string is 0xEE (1110 1110) and the first information is 000011, the information 000001 is superimposed with ones in the first to the third bits and ones in the fifth to the seventh bits. Therefore, the obtained bit string is 000"0" 011"0" (binary number). Here, "0" indicates zero to be determined based on the dominant of 0×EE. In this case, since five zeros continue, the condition for inserting the stuff bit is satisfied.

Therefore, the generation unit 33 may generate 000"0" <1>01"0" (binary number) in consideration of the stuff bit when generating the second information. The value <1> indicates the stuff bit. In such a situation, since a one-bit stuff bit is inserted, the number of bits that can be transmitted as the first information is reduced by one bit. In the example in which the first information is 000011, the first information that can be transmitted is five bits (00001). Therefore, in a case where the processing considering the stuff bit is performed, the bit string that can be used as the first information is the upper five bits.

On the other hand, for example, in a case where the predetermined bit string is 0xEE and the first information is 000101, a bit string obtained when the predetermined bit string and the first information are superimposed is 000"0" 101 "0" (binary number). Here, "0" indicates zero to be determined based on the dominant of 0×EE. In this case, since the number of continuous zeros is four, the condition for inserting the stuff bit is not satisfied. Therefore, unlike the above case where the first information is 000011, it is not necessary to insert a one-bit stuff bit.

However, in a case where the first information is 000011 describe above, the generation unit 33 needs to distinguish the first information from 000"0" <1>01"0" (binary number) to which the one-bit stuff bit has been inserted. Therefore, the generation unit 33 may generate 000"0" <1>10"0" by inserting the stuff bit <1> which is originally unnecessary. That is, similarly to the case where the first information is 000011, the one-bit stuff bit is inserted. Therefore, the bit that can be transmitted as the first information is reduced by one bit. In the example in which the first information is 000101, the first information that can be transmitted is five bits (00010). Therefore, in a case where the processing considering the stuff bit is performed, the bit string that can be used as the first information is the upper five bits.

Alternatively, the generation unit 33 may set control information indicating whether the stuff bit is inserted in the second information in the second region included in the communication data.

For example, in a case where the data format of the communication data is the extended format in FIG. 3B, the second region is an extended region of the CAN-ID (18-bit extended ID).

The control information is, for example, a bit flag. For example, in a case where the bit flag is one, this indicates that the processing considering the stuff bit is performed. In a case where the bit flag is zero, this indicates that the processing considering the stuff bit is not performed.

In a case where the bit flag is one, the generation unit 33 generates 000"0" <1>01"0" to which the stuff bit <1> has been inserted when measures against the stuff bit are necessary as in the bit string 000011. Also, in a case where the measures against the stuff bits are not necessary as in a case of the bit string 000101, the generation unit 33 generates 000"0" <1>10"0" to which the stuff bit <1> has been inserted.

The communication apparatus 30 on the reception side refers to the control information included in the second region of the communication data to determine the length of the bit string to be referred as the first information.

In a case where there are five continuous same bits in the second information by connecting the first information set by a certain communication apparatus 30 and the predetermined bit string set by the communication apparatus 30 other than the above communication apparatus 30, the gateway 10 may instruct each communication apparatus to retransmit the message. When the message is retransmitted, the position to which the first information is set by each communication apparatus may be changed, and the number of bits that can be transmitted may be limited to prevent the insertion of the stuff bit as described above.

As described above, according to the first modification of the first arrangement, the effect similar to that of the first arrangement can be obtained, and the influence of the stuff bit can be considered.

### Second modification of the First Arrangement

Next, a second modification of the first arrangement is described. In the description of the second modification of the first arrangement, the description similar to that of the first arrangement is omitted, and parts different from the first arrangement are described. In the description of the second modification of the first arrangement, a case where the communication data is transmitted and received between the plurality of communication apparatuses 30 is described. The CAN is used as the communication standard of the bus 90 according to the second modification of the first arrangement similarly to the case of the first arrangement.

### Communication Example

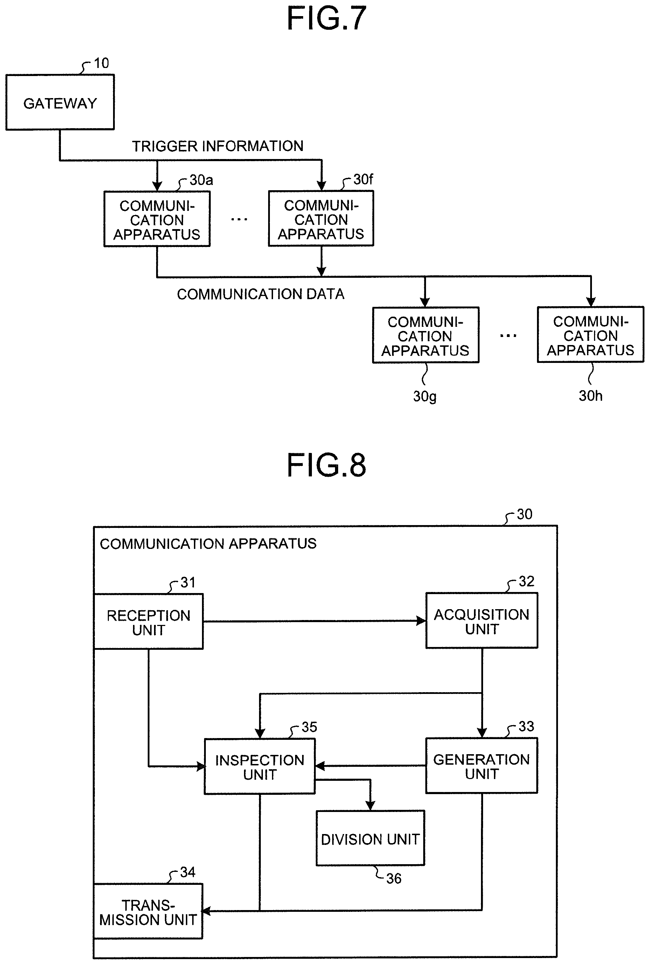

FIG. 7 is a diagram of a communication example according to the second modification of the first arrangement. FIG. 7 is a diagram schematically illustrating the order of the communication, and the gateway 10 and the terminals 20a to 20h are connected via the bus 90 in FIG.1. In the example in FIG. 7, a case where the trigger information is transmitted from the gateway 10 to the communication apparatuses 30a to 30f is illustrated. Here, the trigger information is a message urging the communication between the communication apparatuses 30. Transmission of the trigger information may be omitted. For example, in a case where information, timing, and the like to be communicated are previously shared by the plurality of communication apparatuses 30, the transmission of the trigger information may be omitted.

In the example in FIG. 7, a case is illustrated where the communication data including the second information set by the communication apparatuses 30a to 30f is transmitted to the communication apparatuses 30g and 30h.

A case where the gateway 10 transmits, for example, a signal indicating initialization at the time when the ignition is turned on to the communication apparatuses 30a to 30f as the trigger information is described.

For example, the terminal 20a is a device attached to a steering, the terminal 20b is a device attached to a wiper operating mechanism, the terminal 20g is a device that controls the steering, and the terminal 20h is a device that controls the operation of the wipers. This case is described in detail.

Upon receiving the signal indicating the initialization at the time when the ignition is turned on as the trigger information from the gateway 10, the communication apparatus 30a of the terminal 20a transmits communication data including the first information indicating the current steering angle at the first byte of the data field 201a to the communication apparatus 30g of the terminal 20g.

Upon receiving the signal indicating the initialization at the time when the ignition is turned on as the trigger information from the gateway 10, the communication apparatus 30b of the terminal 20b transmits communication data including the first information indicating a current state of the wipers at the second byte in the data field 201a to the communication apparatus 30h of the terminal 20h.

A transmission destination of the communication data is not limited to the communication apparatuses 30g and 30h and may be arbitrary. For example, the transmission destination of the communication data may include the gateway 10.

### Functional Structure of Communication Apparatus

FIG. 8 is a diagram of an exemplary functional structure of the communication apparatus 30 according to the second modification of the first arrangement. The communication apparatus 30 according to the second modification of the first arrangement includes the reception unit 31, the acquisition unit 32, the generation unit 33, the transmission unit 34, the inspection unit 35, and a division unit 36. In the communication apparatus 30 according to the second modification of the first arrangement, the division unit 36 is further added to the functional structure of the communication apparatus 30 according to the first arrangement.

### Reception Processing of Communication Data

Upon receiving the communication data from a communication apparatus 30 other than the own communication apparatus 30 including the reception unit 31, the reception unit 31 inputs the communication data to the inspection unit 35.

Upon receiving the communication data from the reception unit 31, the inspection unit 35 checks whether the communication data is normal. Since the description of the inspection method is the same as that of the inspection unit 13 of the gateway 10 according to the first arrangement, the description is omitted.

In a case where the communication data is normal, the division unit 36 divides the second information set in the data field 201a of the communication data into the first information set by each communication apparatus 30. Then, the division unit 36 obtains the first information to be obtained by the own communication apparatus 30 from among the plurality of pieces of first information obtained by dividing the second information.

Next, an example of the reception processing of the communication apparatus 30 according to the second modification of the first arrangement is described with reference to a flowchart.

### Reception Processing of Communication Apparatus

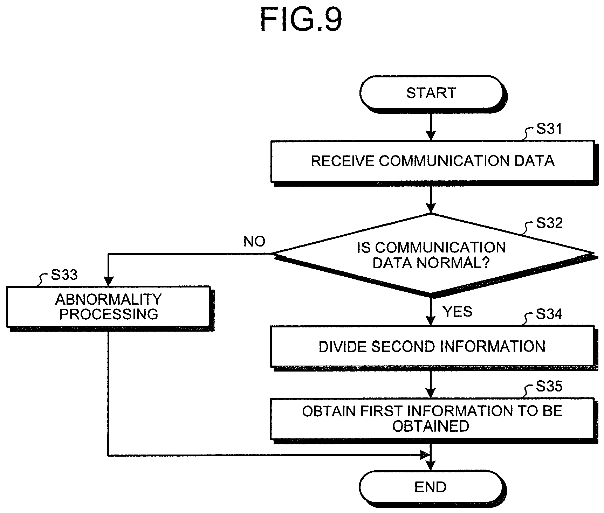

FIG. 9 is a flowchart of an example of the reception processing of the communication apparatus 30 according to the second modification of the first arrangement. The description of processing in steps S31 to S34 is the same as that of steps S21 to S24 of the reception processing of the gateway 10 according to the first arrangement, and therefore, the description is omitted.

The division unit 36 obtains the first information to be obtained by the own communication apparatus 30 in the plurality of pieces of first information obtained by dividing the second information by the processing in step S34 (step S35).

As described above, according to the second modification of the first arrangement, the effect similar to that of the first arrangement can be obtained. That is, the time until the plurality of communication apparatuses 30 (terminal 20) completes the communication can be shortened than a case where the data field 201a of individual communication data is used for each communication apparatus 30.

### Third Modification of the First Arrangement

Next, a third modification of the first arrangement is described. In the description of the third modification of the first arrangement, the description similar to that of the second modification of the first arrangement is omitted, and parts different from the second modification of the first arrangement are described. In the description of the third modification of the first arrangement, a case where not the gateway 10 but the communication apparatus 30 transmits the trigger information is described. The CAN is used as the communication standard of the bus 90 according to the third modification of the first arrangement similarly to the case of the first arrangement.

### Communication Example

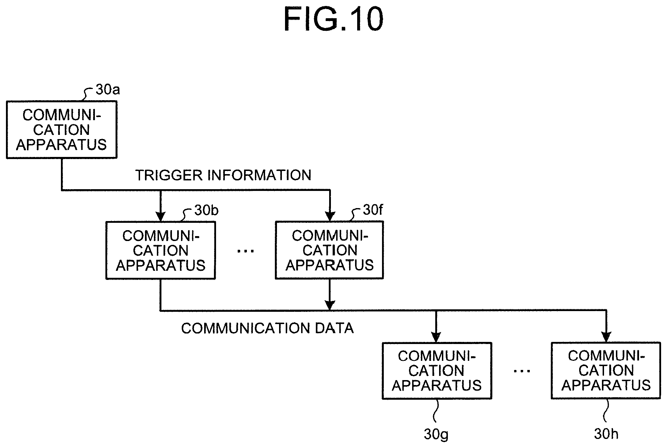

FIG. 10 is a diagram of a communication example according to the third modification of the first arrangement. FIG. 10 is a diagram schematically illustrating the order of the communication, and the gateway 10 and the terminals 20a to 20h are connected via the bus 90 in FIG.1. In the example in FIG. 10, a case where the trigger information is transmitted from the communication apparatus 30a to the communication apparatuses 30b to 30f is illustrated.

The trigger information in the third modification of the first arrangement includes predetermined identification information. The predetermined identification information is, for example, a CAN-ID included in the communication data of the CAN communication. For example, the communication apparatus 30b associates the predetermined CAN-ID with a request of the processing for transmitting sensor information read by a sensor of the terminal 20b to the communication apparatus 30g. At this time, for example, the sensor information is written in a part of the region of the data field 201a (upper four bytes, for example), and the recessive (0xFF) is written in a region other than the part of the region described above (lower four bytes).

In the example in FIG. 10, a case where the communication data including the second information set by the communication apparatuses 30b to 30f is transmitted to the communication apparatuses 30g and 30h is illustrated.

A transmission destination of the communication data is not limited to the communication apparatuses 30g and 30h and may be arbitrary. For example, the transmission destination of the communication data may include the communication apparatus 30a.

Next, an example of communication processing according to the third modification of the first arrangement is described with reference to a flowchart.

### Processing of Communication Apparatus

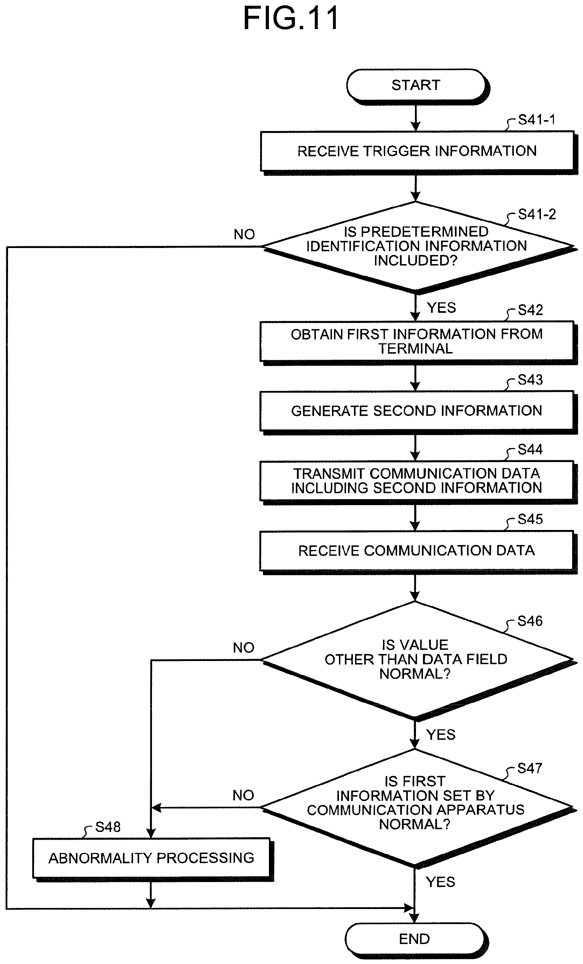

FIG. 11 is a flowchart of an example of processing of the communication apparatus 30b according to the third modification of the first arrangement. A case where the communication apparatus 30b transmits the communication data to the communication apparatus 30g according to the trigger information received from the communication apparatus 30a is described as an example.

First, the reception unit 31 receives the trigger information from the communication apparatus 30a (step S41-1).

Next, the reception unit 31 determines whether the trigger information received by the processing in step S41-1 includes the predetermined identification information (CAN-ID or the like) (step S41-2).

When the predetermined identification information is not included (step S41-2, No), the procedure ends.

In a case where the predetermined identification information is included (step S41-2, Yes), the acquisition unit 32 obtains the first information (sensor information obtained by terminal 20b) according to the trigger information received by the processing in step S41-1 (step S42).

Next, the generation unit 33 generates the second information by using the first information (step S43).

Next, the transmission unit 34 transmits the communication data including the second information generated by the processing in step S43 to the communication apparatus 30g via the bus 90 (step S44).

Note that the communication apparatus 30b may additionally write information indicating that the second information has been added to the communication data on the bus 90 including the trigger information (to be exact, first information has been additionally written to the region where the recessive has been written in the data field 201a) to the trigger information. Such information may be additionally written, for example, to the extended region of the CAN-ID and may be additionally written to a specific region in the data field 201a.

Next, after the communication data has been transmitted to the bus 90 by the processing in step S44, the reception unit 31 receives the communication data superimposed by the other communication apparatus 30 (communication apparatuses 30c to 30f) from the bus 90 (step S45).

Next, the inspection unit 35 checks whether a value other than the data field 201a in the communication data received by the processing in step S45 is normal (step S46).

In a case where the value other than the data field 201a is normal (step S46, Yes), the procedure proceeds to step S47. In a case where the value other than the data field 201a is not normal (step S46, No), the inspection unit 35 performs abnormality processing (step S48). The abnormality processing is, for example, processing for transmitting abnormality information indicating an abnormality to the communication apparatus 30a. The abnormality information is, for example, a plurality of dominants (for example, six continuous zeros).

Next, the inspection unit 35 checks whether the first information, that is set by the own communication apparatus 30, among the communication data received by the processing in step S45 is normal (step S47).

In a case where the first information is normal (step S47, Yes), the procedure ends. In a case where the first information is not normal (step S47, No), the inspection unit 35 performs the abnormality processing (step S48).

In the description of FIG. 11, for easy understanding, an example has been described in which the communication apparatus 30b additionally writes the first information to the communication data on the bus 90 including the trigger information. However, the plurality of communication apparatuses 30 may additionally write the first information to the communication data on the bus 90 including the trigger information. To be exact, the communication apparatuses 30 may additionally write the first information to respective different regions of the regions to which the recessive (0xFF) has been written in the data field 201a.

As described above, in the third modification of the first arrangement, the trigger information indicating the start of the processing is different from that of the second modification of the first arrangement. However, the effect similar to the second modification of the first arrangement can be obtained. That is, the time until the plurality of communication apparatuses 30 (terminal 20) completes the communication can be shortened than a case where the data field 201a of individual communication data is used for each communication apparatus 30.

### Second Arrangement

Next, a second arrangement is described. In the description of the second arrangement, the description similar to that of the first arrangement is omitted, and parts different from the first arrangement are described. In the second arrangement, a case where a message authentication code (MAC) is transmitted as first information is described.

First, an exemplary functional structure of a communication apparatus 30 according to the second arrangement is described.

### Functional Structure of Communication Apparatus

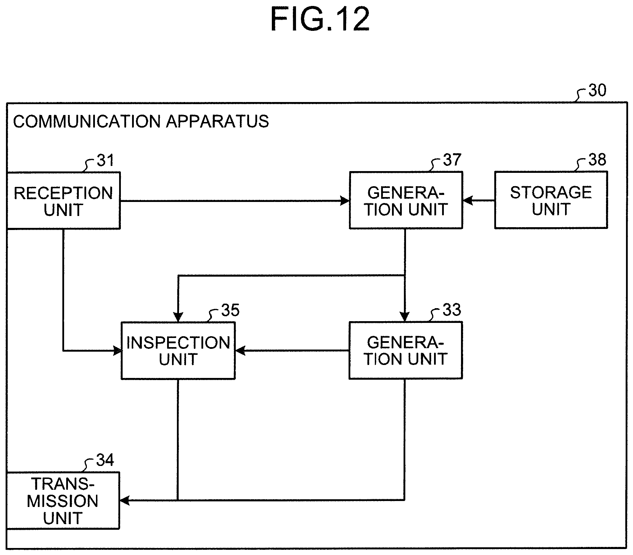

FIG. 12 is a diagram of the exemplary functional structure of the communication apparatus 30 according to the second arrangement. The communication apparatus 30 according to the second arrangement includes the reception unit 31, the generation unit 33, the transmission unit 34, the inspection unit 35, a generation unit 37, and a storage unit 38.

Upon receiving trigger information from a gateway 10 via broadcast communication for the plurality of communication apparatuses 30 (communication apparatuses 30a to 30h), the reception unit 31 inputs the trigger information to the generation unit 37. Note that the trigger information according to the second arrangement may include a challenge component at the time when a MAC value is generated.

Upon receiving the trigger information from the reception unit 31, the generation unit 37 reads a secret key (for example, shared key) from the storage unit 38. When generating the MAC value by using the secret key, the generation unit 37 inputs the MAC value to the generation unit 33 as the first information.

Since the description of processing of the generation unit 33, the transmission unit 34, and the inspection unit 35 is similar to that of the first arrangement, the description is omitted.

Next, an exemplary functional structure of the gateway 10 according to the second arrangement is described.

### Functional Structure of Gateway

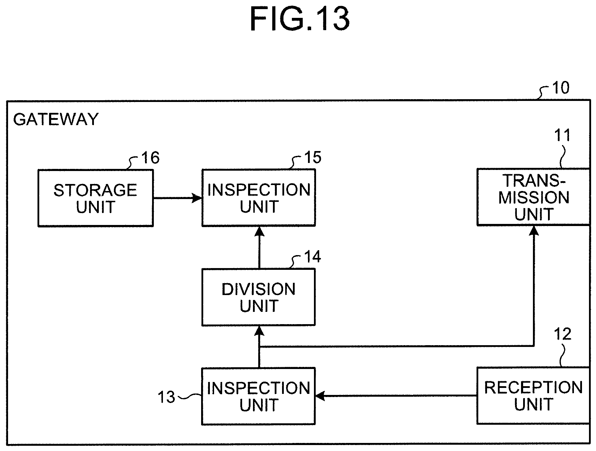

FIG. 13 is a diagram of the exemplary functional structure of the gateway 10 according to the second arrangement. The gateway 10 according to the second arrangement includes the transmission unit 11, the reception unit 12, the inspection unit 13, the division unit 14, an inspection unit 15, and a storage unit 16.

The transmission unit 11 transmits the trigger information via broadcast communication for the plurality of communication apparatuses 30 (communication apparatuses 30a to 30 h).

Upon receiving a single piece of the communication data superimposed on the bus 90 by the communication apparatuses 30a to 30h from the bus 90, the reception unit 12 inputs the communication data to the inspection unit 13.

Upon receiving the communication data from the reception unit 12, the inspection unit 13 checks whether the communication data is normal. In a case where the communication data is abnormal, the inspection unit 13 performs the abnormality processing.

In a case where the communication data is normal, the division unit 14 divides the second information set in the data field 201a of the communication data into the first information (MAC value in second arrangement) set by each communication apparatus 30. The division unit 14 inputs the MAC value generated by each communication apparatus 30 to the inspection unit 15 as the first information.

Upon receiving the MAC value generated by each communication apparatus 30 from the division unit 14, the inspection unit 15 checks whether the MAC value is normal by using the secret key corresponding to each MAC value. In a case where the communication data is abnormal, the inspection unit 15 performs the abnormality processing.

Next, an example of communication processing according to the second arrangement is described with reference to a flowchart.

### Processing of Communication Apparatus

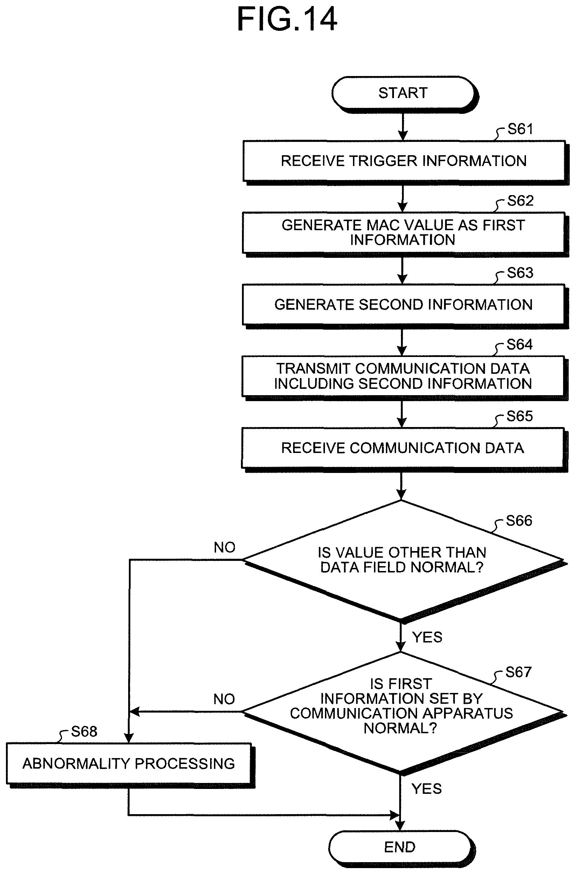

FIG. 14 is a flowchart of the example of the processing of the communication apparatus 30 according to the second arrangement. First, the reception unit 31 receives the trigger information from the gateway 10 (step S61). Next, the generation unit 37 generates the first information (MAC value) by using the secret key stored in the storage unit 38 (step S62).

The description of steps S63 to S68 is similar to the description of steps S3 to S8 (refer to FIG. 5) indicating the example of the processing of the communication apparatus 30 according to the first arrangement. Therefore, the description is omitted.

### Reception Processing of Gateway

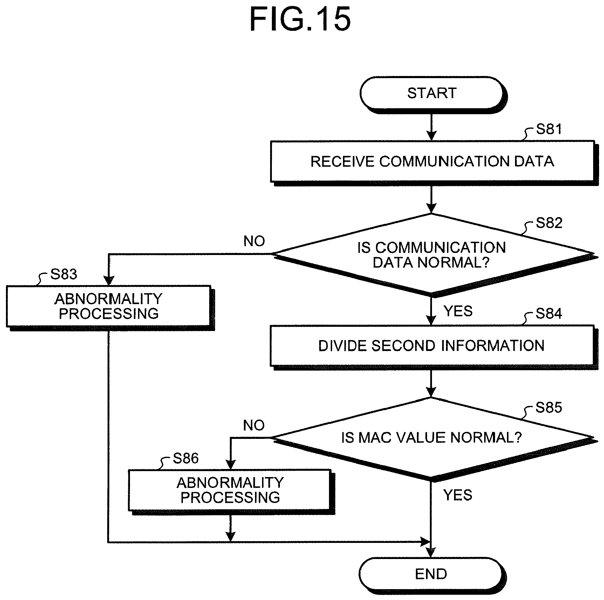

FIG. 15 is a flowchart of an example of authentication processing of the gateway 10 according to the second arrangement. The description of steps S81 to S84 is similar to that of steps S21 to S24 (refer to FIG. 6) indicating the example of the processing of the gateway 10 according to the first arrangement. Therefore, the description of steps S81 to S84 is omitted.

The inspection unit 15 checks whether the plurality of pieces of first information (MAC value) obtained by dividing the second information by the processing in step S84 is normal (step S85). When the MAC value is normal (step S85, Yes), the authentication processing ends. When the MAC value is not normal (step S85, No), the abnormality processing is performed (step S86).

As described above, according to the second arrangement, for example, the authentication of the terminal 20 connected to the bus 90 can be inspected in a shorter time by performing the processing in the second arrangement when the ignition is turned on or at a periodic interval.

Note that the second arrangement can be combined with the first arrangement. For example, the first information indicating a set of firmware version information and the sensor information of each terminal 20 (communication apparatus 30) and the MAC value of the terminal 20 is set in a single data field 201a. As a result, the sensor information and the like to which a message authentication transmitted from each communication apparatus 30 is applied can be processed in a shorter time.

### Modification of Second Arrangement

Next, a modification of the second arrangement is described. In the description of the modification of the second arrangement, the description similar to that of the second arrangement is omitted, and parts different from the second arrangement are described. In the second arrangement, a case where mutual authentication is performed between the terminal 20 (communication apparatus 30) and the other device by using the message authentication code (MAC) generated as the first information is described. In the description of the modification of the second arrangement, a case where the other device is the gateway 10 is described as an example.

In the second arrangement described above, a case where the data field 201a of the communication data (CAN message) is divided and the communication apparatus 30 writes the first information (MAC value) to each of the divided regions has been described. In the modification of the second arrangement, the gateway 10 also writes third information to be described later to the region in which the first information has been written. Then, the mutual authentication is performed based on whether the result of superimposition of the first information and third information becomes a desired value (fifth information).

The functional structure of the communication apparatus 30 according to the modification of the second arrangement is similar to that of the communication apparatus 30 according to the second arrangement. Therefore, the description is omitted.

### Functional Structure of Gateway

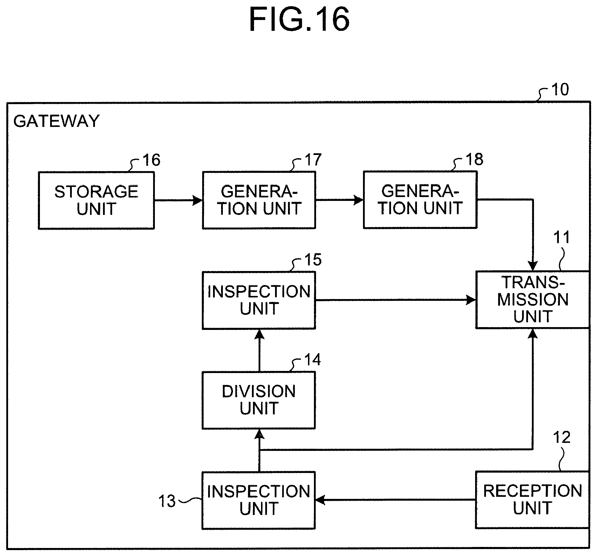

FIG. 16 is a diagram an exemplary functional structure of the gateway 10 according to the modification of the second arrangement. The gateway 10 according to the modification of the second arrangement includes the transmission unit 11, the reception unit 12, the inspection unit 13, the division unit 14, the inspection unit 15, the storage unit 16, and generation units 17 and 18.

### Transmission Processing

The transmission unit 11 transmits the trigger information via broadcast communication for the plurality of communication apparatuses 30 (communication apparatuses 30a to 30 h).

Next, the transmission unit 11 transmits the communication data in which fourth information has been set in the data field 201a via broadcast communication for the plurality of communication apparatuses 30 (communication apparatuses 30a to 30 h). The fourth information corresponds to the second information. However, in the fourth information, not the first information but the third information is set.

The third information is generated by the generation unit 18 for each communication apparatus 30 based on the first information (MAC value) and the fifth information. The first information is generated for each communication apparatus 30 by the generation unit 17.

First, the fifth information is described. The generation unit 18 generates the fifth information based on the first information according to a predetermined rule. For example, in a case where the first information is 11010010, the generation unit 18 creates 11000000 as the fifth information according to the rule in which zeros remain as they are, the bit of one is divided into a first and a second halves, and the second half is zero. Also, for example, in a case where the first information is 11010010, the generation unit 18 generates 10010000 as the fifth information according to the rule in which zeros remain as they are and bits of one are alternately set to zero.

Next, the third information is described. For example, in a case where the first information of the communication apparatus 30a is 11010010 and the fifth information corresponding to the first information is 11000000, the generation unit 18 generates the third information so that the result of superimposition of the first information and the third information becomes 11000000. The result obtained by superimposing 11010010 (first information) and 11000000 is 11000000 (fifth information). Therefore, the generation unit 18 generates 11000000 as the third information, for example. In other words, the fifth information can be determined based on the first information and the third information.

### Reception Processing

Upon receiving a single piece of the communication data superimposed on the bus 90 by the communication apparatuses 30a to 30h from the bus 90, the reception unit 12 inputs the communication data to the inspection unit 13.

Upon receiving the communication data from the reception unit 12, the inspection unit 13 checks whether the communication data is normal. In a case where the communication data is abnormal, the inspection unit 13 performs the abnormality processing.

In a case where the communication data is normal, the division unit 14 divides the fourth information set in the data field 201a of the communication data into the superimposition results for each communication apparatus 30. The division unit 14 inputs the superimposition result for each communication apparatus 30 to the inspection unit 15.

Upon receiving the superimposition result for each communication apparatus 30 from the division unit 14, the inspection unit 15 checks whether each superimposition result coincides with the fifth information generated for each communication apparatus 30. The inspection unit 15 detects that the mutual authentication has failed in a case where the superimposition result does not coincide with the fifth information. The inspection unit 15 detects that the mutual authentication has succeeded in a case where the superimposition result coincides with the fifth information.

Next, an example of mutual authentication processing according to the modification of the second arrangement is described with reference to a sequence diagram.

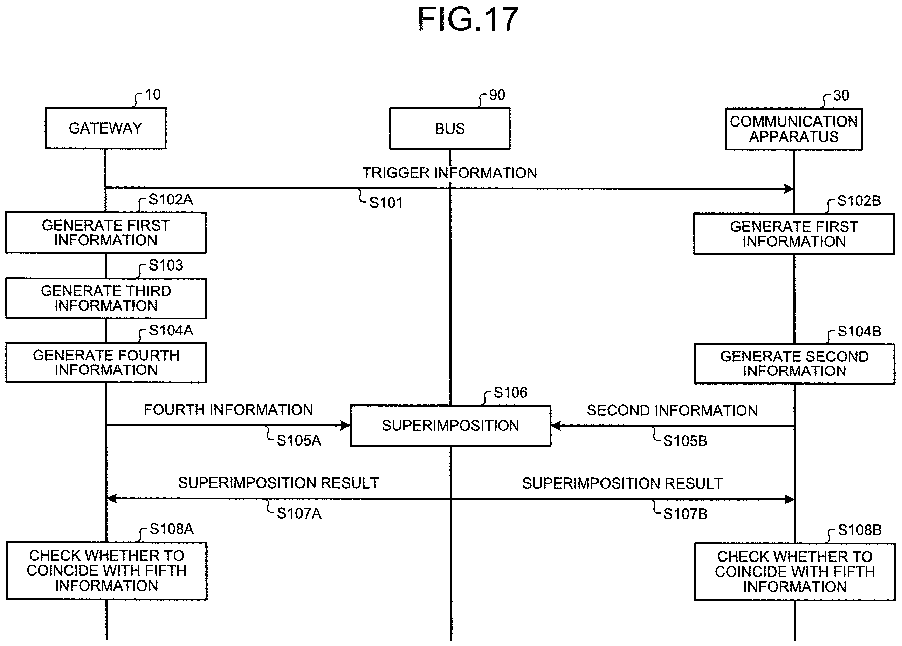

FIG. 17 is a sequence diagram of the example of the mutual authentication processing according to the modification of the second arrangement. In the example in FIG. 17, for easy understanding, a case where the gateway 10 performs the mutual authentication with a single terminal 20 (communication apparatus 30) is described as an example.

First, the transmission unit 11 of the gateway 10 transmits the trigger information to the communication apparatus 30 via the bus 90 (step S101). Next, the generation unit 17 of the gateway 10 generates the MAC value as the first information by using a secret key stored in the storage unit 16 (step S102A). Next, the generation unit 18 of the gateway 10 generates the third information based on the first information (MAC value) and the fifth information (step S103). Next, the generation unit 18 of the gateway 10 sets the third information at the position allocated to the communication apparatus 30 to be mutually authenticated in the data field 201a and sets the recessive in the data field 201a other than the position where the third information has been set to generate the fourth information (step S104A). Next, the transmission unit 11 of the gateway 10 transmits the fourth information generated by the processing in step S104A to the bus 90 (step S105A).

On the other hand, the generation unit 37 of the communication apparatus 30 generates the MAC value as the first information by using the secret key stored in the storage unit 38 (step S102B). Next, the generation unit 33 of the communication apparatus 30 sets the first information at the position allocated to the communication apparatus 30 in the data field 201a and sets the recessive in the data field 201a other than the position where the first information has been set to generate the second information (step S104B). Next, the transmission unit 34 of the communication apparatus 30 transmits the second information generated by the processing in step S104B to the bus 90 (step S105B).

Next, the bus 90 superimposes the fourth information transmitted from the gateway 10 by the processing in step S105A with the second information transmitted from the communication apparatus 30 by the processing in step S105B (step S106). Specifically, the third information included in the fourth information and the first information included in the second information are superimposed.

Next, the reception unit 12 of the gateway 10 receives the superimposition result superimposed by the processing in step S106 from the bus 90 (step S107A). Next, the inspection unit 15 of the gateway 10 checks whether the superimposition result of the first information with the third information coincides with the fifth information (step S108A). The inspection unit 15 detects that the mutual authentication has failed in a case where the superimposition result does not coincide with the fifth information. The inspection unit 15 detects that the mutual authentication has succeeded in a case where the superimposition result coincides with the fifth information.

On the other hand, the reception unit 31 of the communication apparatus 30 receives the superimposition result superimposed by the processing in step S106 from the bus 90 (step S107B). Next, the inspection unit 35 of the communication apparatus 30 checks whether the superimposition result of the first information with the third information coincides with the fifth information (step S108B). The inspection unit 35 detects that the mutual authentication has failed in a case where the superimposition result does not coincide with the fifth information. The inspection unit 35 detects that the mutual authentication has succeeded in a case where the superimposition result coincides with the fifth information.

In the above description, a case where the gateway 10 and a single terminal 20 (the communication apparatus 30) are mutually authenticated has been described. However, the same can be applied to a case where the gateway 10 and the plurality of terminals 20 are mutually authenticated by dividing the data field 201a. For example, the superimposition result is set in each of the eight regions which are obtained by dividing an eight-byte data field 201a by one byte so that the gateway 10 and eight terminals 20 (communication apparatus 30) can be concurrently and mutually authenticated.

As described above, according to the modification of the second arrangement, the mutual authentication with the plurality of terminals 20 can be performed in a shorter time.

### Third Arrangement

Next, a third arrangement is described. In the description of the third arrangement, the description similar to that of the first arrangement is omitted, and parts different from the first arrangement are described. In the third arrangement, a case where encryption information is transmitted as first information is described.

### Functional Structure of Communication Apparatus

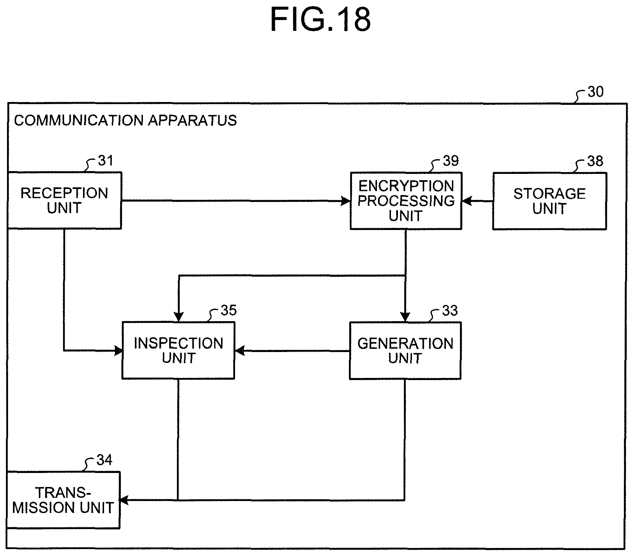

FIG. 18 is a diagram of an exemplary functional structure of a communication apparatus according to the third arrangement. The communication apparatus 30 according to the third arrangement includes the reception unit 31, the generation unit 33, the transmission unit 34, the inspection unit 35, the storage unit 38, and an encryption processing unit 39.

Upon receiving trigger information from a gateway 10 via broadcast communication for the plurality of communication apparatuses 30 (communication apparatuses 30a to 30 h), the reception unit 31 inputs the trigger information to the encryption processing unit 39.

Upon receiving the trigger information from the reception unit 31, the encryption processing unit 39 reads an encryption key from the storage unit 38. Then, the encryption processing unit 39 generates encryption information by encrypting the data to be transmitted by using the encryption key.

Here, a plain text to be encrypted is, for example, an operating state of a terminal 20, version information of firmware of the terminal 20, and sensor information obtained by the terminal 20.

The encryption method may be arbitrary. The encryption method is, for example, a stream encryption method. For example, a random number is assigned to the trigger information to be transmitted from the gateway 10, and the encryption processing unit 39 of the communication apparatus 30 calculates a hash (random number and encryption key) as a temporary key based on the random number and the encryption key. The hash is calculated based on a hash function such as SHA-256. Then, the communication apparatus 30 generates the encryption information by calculating an exclusive OR of the plain text to be transmitted and the temporary key. The encryption processing unit 39 inputs the encryption information to the generation unit 33 as the first information.

Since the description of processing of the generation unit 33, the transmission unit 34, and the inspection unit 35 is similar to that of the first arrangement, the description is omitted.

Next, an exemplary functional structure of the gateway 10 according to the third arrangement is described.

### Functional Structure of Gateway

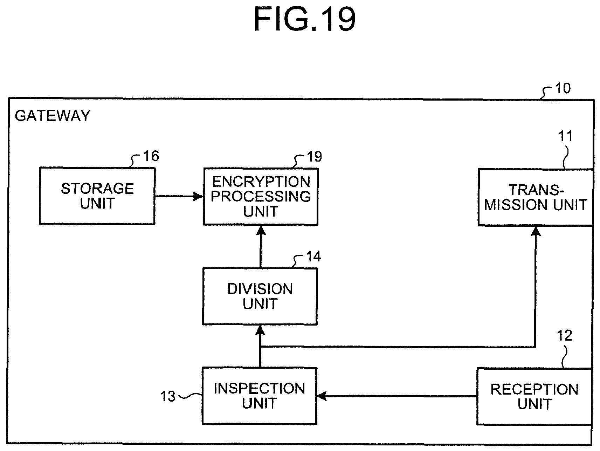

FIG. 19 is a diagram of the exemplary functional structure of the gateway 10 according to the third arrangement. The gateway 10 according to the third arrangement includes the transmission unit 11, the reception unit 12, the inspection unit 13, the division unit 14, the storage unit 16, and an encryption processing unit 19.

The transmission unit 11 transmits the trigger information via broadcast communication for the plurality of communication apparatuses 30 (communication apparatuses 30a to 30 h).

Upon receiving a single piece of the communication data superimposed on the bus 90 by the communication apparatuses 30a to 30h from the bus 90, the reception unit 12 inputs the communication data to the inspection unit 13.

Upon receiving the communication data from the reception unit 12, the inspection unit 13 checks whether the communication data is normal. In a case where the communication data is abnormal, the inspection unit 13 performs the abnormality processing.

In a case where the communication data is normal, the division unit 14 divides the second information set in the data field 201a of the communication data into the first information (encryption information in third arrangement) set by each communication apparatus 30. The division unit 14 inputs the encryption information generated by each communication apparatus 30 to the encryption processing unit 19 as the first information.

Upon receiving the encryption information generated by each communication apparatus 30 from the division unit 14, the encryption processing unit 19 decrypts the encryption information by using a decryption key corresponding to the encryption information.

Next, an example of communication processing according to the third arrangement is described with reference to a flowchart.

### Processing of Communication Apparatus

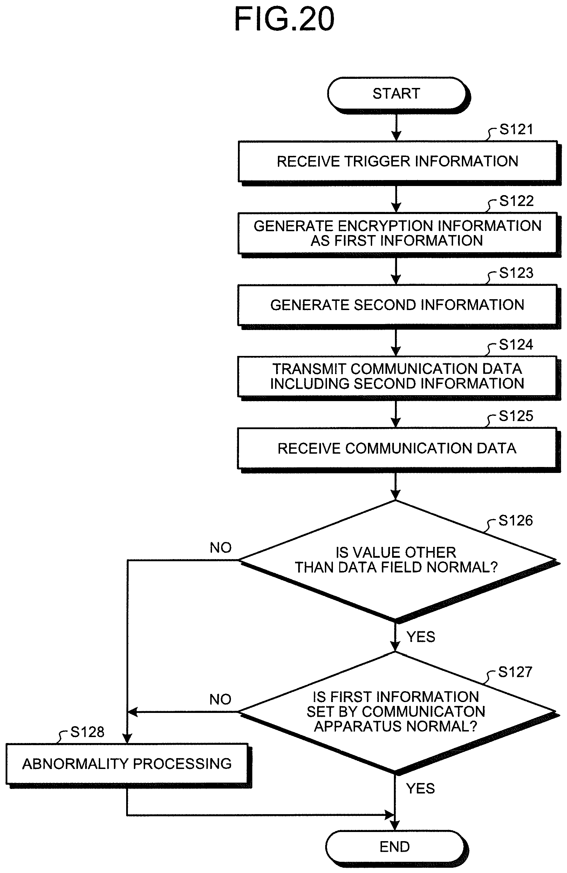

FIG. 20 is a flowchart of the example of the processing of the communication apparatus 30 according to the third arrangement. First, the reception unit 31 receives the trigger information from the gateway 10 (step S121). Next, the encryption processing unit 39 generates the encryption information by encrypting data to be transmitted by using the encryption key stored in the storage unit 38 (step S122).

The description of steps S123 to S128 is similar to the description of steps S3 to S8 (refer to FIG. 5) indicating the example of the processing of the communication apparatus 30 according to the first arrangement. Therefore, the description is omitted.

### Reception Processing of Gateway

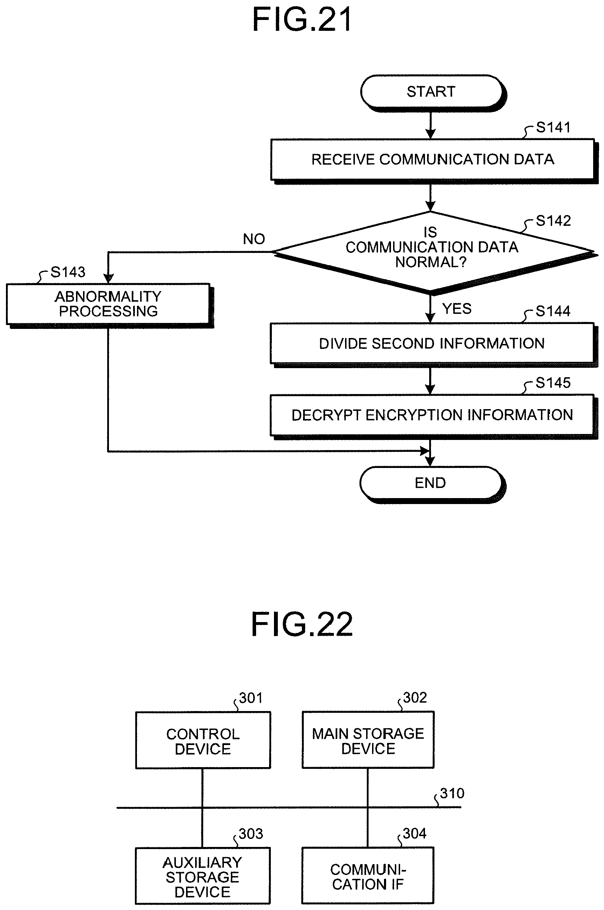

FIG. 21 is a flowchart of an example of authentication processing of the gateway 10 according to the third arrangement. The description of steps S141 to S144 is similar to that of steps S21 to S24 (refer to FIG. 6) indicating the example of the processing of the gateway 10 according to the first arrangement. Therefore, the description is omitted.

The encryption processing unit 19 decrypts the plurality of pieces of first information (encryption information) obtained by dividing the second information by the processing in step S144 by using the decryption key corresponding to each piece of encryption information (step S145).

As described above, according to the third arrangement, the time required for the communication of the information on the plurality of communication apparatuses 30 (operating state, firmware version information, and sensor information) can be reduced, and also, the information can be concealed by the encryption processing.

### Example of Hardware Configuration

Finally, an exemplary hardware configuration of the gateway 10 and the communication apparatus 30 according to the first to the third arrangements is described.

FIG. 22 is a diagram of an exemplary main part of the hardware configuration of the gateway 10 and the communication apparatus 30 according to the first to third arrangements. The gateway 10 and the communication apparatus 30 according to the first to third arrangements include a control device 301, a main storage device 302, an auxiliary storage device 303, and a communication interface (IF) 304. The control device 301, the main storage device 302, the auxiliary storage device 303, and the communication IF 304 are connected via a bus 310.

The control device 301 executes a program read from the auxiliary storage device 303 to the main storage device 302. The main storage device 302 is a memory such as a read only memory (ROM) and a random access memory (RAM). The auxiliary storage device 303 is a memory card, a hard disk drive (HDD), and the like.

The communication IF 304 is an interface to communicate with other devices.

The program executed by the gateway 10 and the communication apparatus 30 according to the first to third arrangements is stored in a computer readable storage medium such as a CD-ROM, a memory card, a CD-R, and a digital versatile disk (DVD) in a file of a format which can be installed or executed, and is provided as a computer program product.

The program executed by the gateway 10 and the communication apparatus 30 according to the first to third arrangements may be stored on a computer connected to a network such as the Internet and may be provided by being downloaded via the network. Also, the program executed by the gateway 10 and the communication apparatus 30 according to the first to third arrangements may be provided via a network such as the Internet without downloading the program.

Also, the program executed by the gateway 10 and the communication apparatus 30 according to the first to third arrangements may be provided by previously installing the program to the ROM and the like.

The programs executed by the gateway 10 and the communication apparatus 30 according to the first to third arrangements has a module configuration including functions which can be realized by the program of the functional structures of the gateway 10 and the communication apparatus 30 according to the first to third arrangements.

The function realized by the program is loaded to the main storage device 302 by reading and executing the program from the storage medium such as the auxiliary storage device 303 by the control device 301. That is, the function realized by the program is generated in the main storage device 302.

A part of or all of the functions of the gateway 10 and the communication apparatus 30 according to the first to third arrangements may be realized by hardware such as an integrated circuit (IC).

For example, in the example of the communication apparatus 30 according to the first arrangement, the reception unit 31 and the transmission unit 34 may be realized by hardware, and the acquisition unit 32, the generation unit 33, and the inspection unit 35 may be realized by software. Further, for example, in the example of the gateway 10 according to the first arrangement, the transmission unit 11 and the reception unit 12 may be realized by hardware, and the inspection unit 13 and the division unit 14 may be realized by software.

Further, the functional structure of the gateway 10 and the communication apparatus 30 according to the first to third arrangements described above is an example, and the gateway 10 and the communication apparatus 30 may be realized by other functional structures. For example, the generation units 33 and 37 of the communication apparatus 30 according to the second arrangement may be realized by a single generation unit.

While certain arrangements have been described, these arrangements have been presented by way of example only, and are not intended to limit the scope of the claims. Indeed, the apparatuses described herein may be embodied in a variety of other forms; furthermore, various omissions, substitutions and changes in the form of the apparatuses described herein may be made.

Example 1. A communication apparatus is connected to a bus in which a second bit has higher priority than a first bit, and the communication apparatus includes an acquisition unit, a generation unit, and transmission unit. In the communication apparatus, the acquisition unit is configured to obtain first information. The generation unit is configured to generate second information in which the first information is set at a predetermined position and a predetermined bit string including the first bit is set at a position other than the predetermined position. The transmission unit is configured to transmit communication data including the second information.

Example 2. In the communication apparatus according to Example 1, the bus is a controller area network (CAN), the first bit is a recessive, and the second bit is a dominant.

Example 3. In the communication apparatus according to Example 2, the one or more processors are configured to set control information in the communication data, the control information indicates whether a stuff bit is inserted in the second information.

Example 4. In the communication apparatus according to Example 1, the one or more processors are further configured to receive the trigger information from the gateway connected to the bus, and the acquiring obtains the first information according to the trigger information, and the transmitting transmits the communication data to the gateway.

Example 5. In the communication apparatus according to Example 1, the one or more processors are further configured to receive the trigger information from a first communication apparatus connected to the bus, and the acquiring obtains the first information according to the trigger information, and the transmitting transmits the communication data to a second communication apparatus.

Example 6. In the communication apparatus according to Example 5, the generating generates the second information in a case where the trigger information includes predetermined identification information, and the transmitting transmits the communication data to the second communication apparatus.

Example 7. In the communication apparatus according to Example 1, the one or more processors are configured to generate a message identifier by using a secret key and uses the message identifier as the first information.

Example 8. In the communication apparatus according to Example 1, the one or more processors are further configured to encrypt the first information using an encryption key, and the generating generates the second information by using the encrypted first information.

Example 9. A communication system in which a gateway and a plurality of communication apparatuses are connected via a bus in which a second bit has higher priority than a first bit. In the communication system, the communication apparatuses include an acquisition unit configured to obtain first information, a first generation unit configured to generate second information in which the first information is set at a first position allocated to each of the communication apparatuses and the first bit is set at a second position other than the first position, and a transmission unit configured to transmit first communication data including the second information in a first region to the bus. And, the gateway includes a second reception unit configured to receive one piece of the communication data from the bus, and a division unit configured to divide the second information into the first information set by each of the communication apparatuses.

Example 10. In the communication system according to Example 9, the gateway further includes a second generation unit configured to generate fourth information in which third information based on the first information is set at the first position allocated to each of the communication apparatuses and a predetermined bit string including the first bit is set in the first region other than the first position in the first region included in second communication data, a transmission unit configured to transmit the second communication data including the fourth information to the bus, and an inspection unit configured to check whether a superimposition result coincides with fifth information determined based on the first information and the third information when third communication data including the superimposition result in which the first information included in the second information is superimposed with the third information included in the fourth information is received from the bus.

Example 11. A communication method of a communication apparatus connected to a bus in which a second bit has higher priority than a first bit, the communication method includes obtaining first information, generating second information in which the first information is set at a predetermined position and a predetermined bit string including the first bit is set at a position other than the predetermined position, and transmitting communication data including the second information.

Example 12. A computer-readable medium includes programmed instructions which cause a communication apparatus connected to a bus in which a second bit has higher priority than a first bit to function as an acquisition unit configured to obtain first information, a generation unit configured to generate second information in which the first information is set at a predetermined position and a predetermined bit string including the first bit is set at a position other than the predetermined position, and a transmission unit configured to transmit communication data including the second information.

## Claims

1. A communication apparatus (30) connected to a bus (90) in which a second bit has higher priority than a first bit, the communication apparatus (30) comprising:
an acquisition unit (32) configured to obtain first information;
a generation unit (33) configured to generate second information in which the first information is set at a predetermined position and a predetermined bit string including the first bit is set at a position other than the predetermined position; and
a transmission unit (34) configured to transmit communication data including the second information.

2. The communication apparatus (30) according to claim 1, wherein
the bus (90) is a controller area network (CAN),
the first bit is a recessive, and
the second bit is a dominant.

3. The communication apparatus (30) according to claim 2, wherein
the generation unit (33) sets control information in the communication data, the control information indicates whether a stuff bit is inserted in the second information.

4. The communication apparatus (30) according to claim 1, further comprising:
a reception unit (31) configured to receive the trigger information from the gateway connected to the bus, wherein
the acquisition unit (32) obtains the first information according to the trigger information, and
the transmission unit (34) transmits the communication data to the gateway.

5. The communication apparatus (30) according to claim 1, further comprising:
a reception unit (31) further configured to receive the trigger information from a first communication apparatus (30) connected to the bus (90), wherein
the acquisition unit (32) obtains the first information according to the trigger information, and
the transmission unit (34) transmits the communication data to a second communication apparatus (30).

6. The communication apparatus (30) according to claim 5, wherein
the generation unit (33) generates the second information in a case where the trigger information includes predetermined identification information, and
the transmission unit (34) transmits the communication data to the second communication apparatus.

7. The communication apparatus (30) according to claim 1, wherein
the generation unit (33) generates a message identifier by using a secret key and uses the message identifier as the first information.

8. The communication apparatus (30) according to claim 1, further comprising:
an encryption processing unit (39) configured to encrypt the first information using an encryption key, wherein
the generation unit (33) generates the second information by using the encrypted first information.

9. A communication system (100) in which a gateway (10) and a plurality of communication apparatuses (30) are connected via a bus (90) in which a second bit has higher priority than a first bit, wherein
the communication apparatuses (30) include:
an acquisition unit (32) configured to obtain first information;
a first generation unit (33) configured to generate second information in which the first information is set at a first position allocated to each of the communication apparatuses (30) and the first bit is set at a second position other than the first position; and
a transmission unit (34) configured to transmit first communication data including the second information in a first region to the bus (90), and
the gateway (10) includes
a second reception unit (12) configured to receive one piece of the communication data from the bus (90); and
a division unit (14) configured to divide the second information into the first information set by each of the communication apparatuses (30).

10. The communication system (100) according to claim 9, wherein
the gateway (10) further includes:
a second generation unit (18) configured to generate fourth information in which third information based on the first information is set at the first position allocated to each of the communication apparatuses (30) and a predetermined bit string including the first bit is set in the first region other than the first position in the first region included in second communication data;
a transmission unit (11) configured to transmit the second communication data including the fourth information to the bus (90), and
an inspection unit (15) configured to check whether a superimposition result coincides with fifth information determined based on the first information and the third information when third communication data including the superimposition result in which the first information included in the second information is superimposed with the third information included in the fourth information is received from the bus (90).

11. A communication method of a communication apparatus (30) connected to a bus (90) in which a second bit has higher priority than a first bit, the communication method comprising:
obtaining first information;
generating second information in which the first information is set at a predetermined position and a predetermined bit string including the first bit is set at a position other than the predetermined position; and
transmitting communication data including the second information.

12. A computer-readable medium including programmed instructions, the instructions causing a communication apparatus (30) connected to a bus (90) in which a second bit has higher priority than a first bit to function as:
an acquisition unit (32) configured to obtain first information;
a generation unit (33) configured to generate second information in which the first information is set at a predetermined position and a predetermined bit string including the first bit is set at a position other than the predetermined position; and
a transmission unit (34) configured to transmit communication data including the second information.
